# FASCICULE DE BREVET EUROPEEN

(11) **EP 1 859 187 B1**
(45) Date de publication et mention de la délivrance du brevet: **31.12.2008**
(21) Numéro de dépôt: 05822895.8
(22) Date de dépôt: 30.11.2005
(51) Int. Cl.: F16L 11/115

(54) **TUBULURE FLEXIBLE PROTEGEE CONTRE LES VIBRATIONS**
GEGEN SCHWINGUNGEN GESCHÜTZTER SCHLAUCH
FLEXIBLE TUBE PROTECTED AGAINST VIBRATIONS

(30) Priorité: 17.03.2005 FR 0502642
(43) Date de publication de la demande: 28.11.2007
(73) Titulaire: TUBEST FLEXIBLE SOLUTIONS, 02130 Fere en Tardenois (FR)
(72) Inventeur: WINTREBERT, Eric, F-02290 Ressons-le-Long (FR)
(74) Mandataire: Gaillarde, Frédéric F. Ch.
(86) Numéro de dépôt international: PCT/FR2005/002973
(87) Numéro de publication internationale: WO 2006/097584

(56) Documents cités:
- EP-A- 0 205 724
- DE-U1- 8 716 424
- US-A- 2 146 559
- US-A- 2 757 690
- US-A- 3 240 234

## Description

La présente invention se rapporte à une tubulure flexible utilisée dans le domaine de l'industrie, et notamment dans l'énergie pour le transport de fluides dangereux ou non.

Il est déjà connu d'équiper des turbines à gaz à l'aide de tubulures flexibles de ce type. Pour cela, chaque tubulure flexible peut tout simplement consister dans un tuyau flexible inséré dans une gaine réalisée en acier inoxydable.

Il a également été proposé une tubulure flexible plus élaborée possédant une protection renforcée contre les contraintes exercées depuis l'extérieur et susceptibles de l'endommager De telles tubulures sont par exemple connues de EP 0205724, US 2757690 DE 874640, US 2146559. Une telle tubulure flexible est habituellement constituée d'un tuyau onduleux autour duquel sont rapportés successivement, d'une part, une ou deux tresses de tenue en pression de forme tubulaire réalisées en acier inoxydable, et d'autre part, une protection mécanique externe de forme également tubulaire.

Néanmoins, une telle tubulure flexible est sollicitée de façon très importante en vibration lors du fonctionnement, et le déplacement relatif qui en découle entre la tresse de tenue en pression et le tuyau onduleux provoque une usure prématurée des sommets d'ondes du tuyau onduleux. De plus, le déplacement relatif de la protection mécanique externe par rapport à la tresse de tenue en pression accroît davantage le risque d'usure prématurée de la tubulure flexible dans la mesure où la protection mécanique externe, sous l'effet des sollicitations en vibration, est susceptible d'endommager la tresse de tenue en pression, voire même le tuyau onduleux par l'intermédiaire de ladite tresse de tenue en pression.

La présente invention a pour but de résoudre le problème précédemment évoqué, et consiste pour cela en une tubulure flexible destinée notamment au transport de fluides dangereux ou non, cette tubulure flexible comprenant un tuyau onduleux interne autour duquel sont rapportés au moins une tresse de tenue en pression de forme tubulaire réalisée dans un matériau adapté ainsi qu'une protection mécanique externe de forme tubulaire, caractérisée en ce qu'elle comprend, d'une part, une tresse anti-friction de forme tubulaire positionnée entre le tuyau onduleux et la tresse de tenue en pression, ladite tresse anti-friction étant réalisée dans un matériau adapté dont la dureté et/ou le coefficient de friction sont inférieurs à ceux du matériau employé pour réaliser la tresse de tenue en pression, et d'autre part, au moins une gaine d'amortissement positionnée entre la tresse de tenue en pression et la protection mécanique externe.

Ainsi, dans une tubulure flexible selon l'invention, l'incorporation d'au moins une gaine d'amortissement permet de minimiser grandement les déplacements relatifs générés au sein de la tubulure flexible sous l'effet des sollicitations en vibration, et contribue par conséquent à allonger la durée de vie des différents composants. Le couplage « gaine(s) d'amortissement(s)/tresse anti-friction » permet de lutter encore plus efficacement contre l'usure prématurée de la tubulure flexible, notamment en protégeant les sommets d'ondes du tuyau onduleux de tout contact avec la tresse de tenue en pression en acier inoxydable.

Dans une tubulure flexible selon la présente invention, le tuyau onduleux peut comporter des ondes parallèles ou hélicoïdales.

Avantageusement, le tuyau onduleux est réalisé dans un matériau choisi dans le groupe formé par les aciers inoxydables et les alliages base nickel.

Avantageusement encore, la tresse anti-friction est réalisée dans un matériau choisi dans le groupe formé par les alliages cuivreux comme par exemple le bronze, les fibres naturelles et les fibres synthétiques. Les fibres naturelles et les fibres synthétiques peuvent par exemple consister respectivement dans de la fibre de verre et du Kevlar^{®}.

Préférentiellement, chaque tresse de tenue en pression est réalisée en acier inoxydable.

Préférentiellement encore, chaque gaine d'amortissement est réalisée en une tresse en fibres de verre ou en un tricot de fibres de verre enduit de silicone, ou encore dans une autre matière équivalente.

Dans un mode de réalisation préféré de l'invention, la protection mécanique externe consiste en un tuyau agrafé réalisé en acier inoxydable ou non.

L'invention sera mieux comprise à l'aide de la description détaillée qui est exposée ci-dessous en regard du dessin annexé dans lequel :

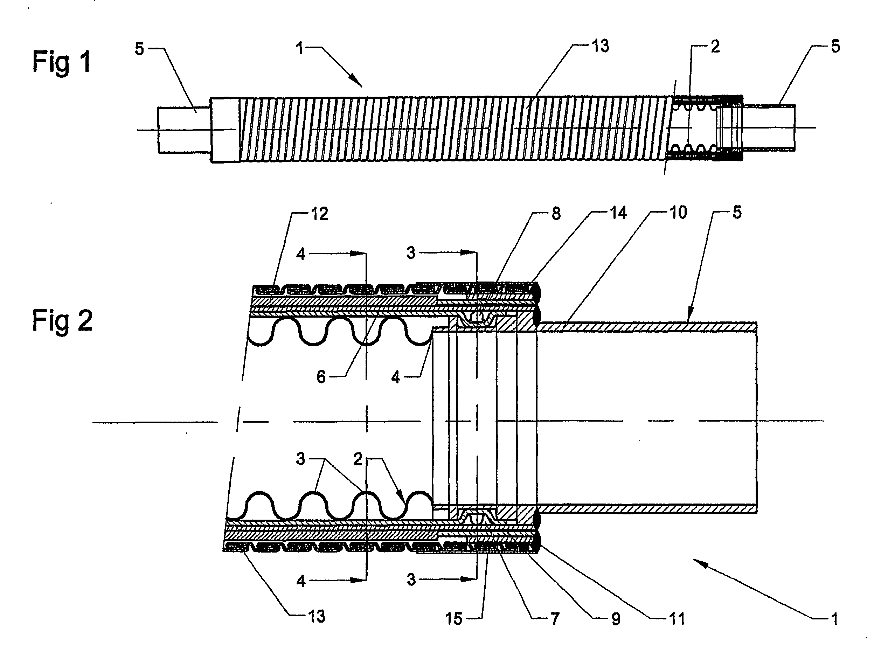

La figure 1 est une vue d'ensemble d'une tubulure flexible selon l'invention, avec omission d'une partie de la protection mécanique externe ;
La figure 2 est une vue partielle en coupe longitudinale au niveau d'une extrémité de la tubulure flexible représentée à la figure 1 ;
La figure 3 est une vue en coupe selon la ligne 3-3 de la tubulure flexible représentée à la figure 2 ;
La figure 4 est une en coupe selon la ligne 4-4 de la tubulure flexible représentée à la figure 2.

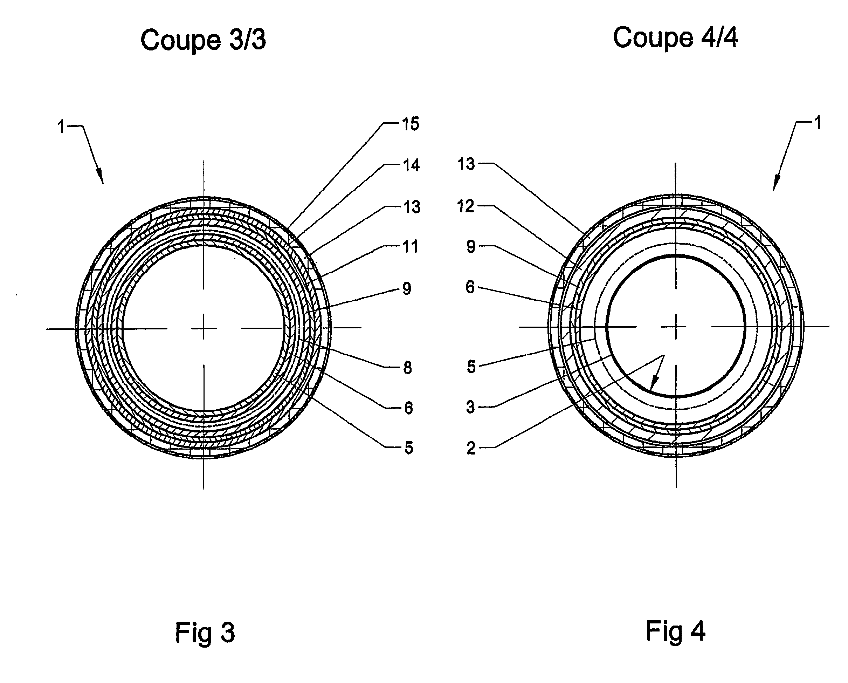

Une tubulure flexible 1 selon l'invention, telle que représentée aux figures 4, est obtenue à partir d'un tuyau onduleux 2 à ondes parallèles 3 réalisé en acier inoxydable et soudé à chacune de ses deux extrémités 4 à un raccord 5.

Une tresse anti-friction 6 en bronze est ensuite glissée le long du tuyau onduleux 2, cette tresse anti-friction 6 étant de forme tubulaire et possédant un diamètre interne légèrement supérieur au plus grand diamètre du tuyau onduleux 2, et une longueur sensiblement égale à celle dudit tuyau onduleux 2. Plus précisément, chacune des deux extrémités de cette tresse anti-friction 6 est sertie dans un évidement 7 présenté par le raccord 5 correspondant et est maintenue dans cette position grâce un collier de serrage 8 logé dans l'évidement 7.

Une tresse de retenue de pression 9 réalisée en acier inoxydable est ensuite glissée le long de la tresse anti-friction 6. Cette tresse de retenue en pression 9 est conçue de façon à posséder un diamètre interne légèrement supérieur au diamètre externe de la tresse anti-friction 6, et une longueur sensiblement égale à celle de ladite tresse anti-friction 6. Au niveau de chacune des deux extrémités de la tresse de retenue en pression 9 peut être glissée une bague d'arrêt 11, ladite tresse de retenue en pression 9 et chaque bague d'arrêt 11 pouvant ensuite être soudées sur la face latérale externe 10 du raccord 5 correspondant.

Une gaine d'amortissement 12, réalisée de préférence à l'aide d'un tricot de fibres de verre enduit de silicone, et possédant une épaisseur comprise préférentiellement entre 3 et 4 mm, est ensuite glissée le long de la tresse de retenue en pression 9 de façon à venir en butée contre la bague d'arrêt 11.

Enfin, une protection mécanique externe, réalisée sous la forme d'un tuyau agrafé 13 en acier inoxydable pourvue d'une bague de rattrapage 14 à chacune de ses deux extrémités, est glissée autour de la gaine d'amortissement 12. Plus précisément, une bague d'arrêt externe 15 est enfilée sur chacune des deux extrémités du tuyau agrafé 13, et ce dernier avec ses bagues de rattrapage 14 est finalement fixé par soudure à chacune de ses deux extrémités aux bagues d'arrêt 15 et à la face latérale externe 10 des raccords 5.

Ainsi, dans une tubulure selon l'invention, les sommets d'ondes 3 du tuyau onduleux 2 étant placés au contact de la tresse anti-friction 6 qui est réalisée dans un matériau dont la dureté et/ou le coefficient de friction sont inférieurs à ceux du matériau employé pour réaliser la tresse de tenue en pression 9, il en découle que le phénomène d'usure est grandement réduit. Il l'est d'autant grâce à la gaine d'amortissement 12 qui minimise les déplacements relatifs des différents composants les uns par rapport aux autres du fait des sollicitations en vibration auxquelles la tubulure flexible 1 est confrontée. A titre d'exemple, il a été constaté qu'une tubulure flexible 1 selon l'invention équipée d'une telle combinaison « gaine(s) d'amortissement(s)/tresse anti-friction » pouvait avoir une durée de vie vingt fois supérieure à celle d'une tubulure flexible traditionnellement utilisée.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Tubulure flexible (1) destinée notamment au transport de fluides dangereux ou non, cette tubulure flexible comprenant un tuyau onduleux (2) interne autour duquel sont rapportés au moins une tresse de tenue en pression (9) de forme tubulaire réalisée dans un matériau adapté ainsi qu'une protection mécanique externe (13) de forme tubulaire, **caractérisée en ce qu'**elle comprend, d'une part, une tresse anti-friction (6) de forme tubulaire positionnée entre le tuyau onduleux (2) et la tresse de tenue en pression (9), ladite tresse anti-friction (6) étant réalisée dans un matériau adapté dont la dureté et/ou le coefficient de friction sont inférieurs à ceux du matériau employé pour réaliser la tresse de tenue en pression (9), et d'autre part, au moins une gaine d'amortissement (12) positionnée entre la tresse de tenue en pression (9) et la protection mécanique externe (13).

2. Tubulure flexible (1) selon la revendication 1, **caractérisée en ce que** le tuyau onduleux (2) comporte des ondes (3) parallèles ou hélicoïdales.

3. Tubulure flexible (1) selon l'une quelconque des revendications 1 ou 2, **caractérisée en ce que** le tuyau onduleux (2) est réalisé dans un matériau choisi dans le groupe formé par les aciers inoxydables et les alliages base nickel.

4. Tubulure flexible (1) selon l'une quelconque des revendications 1 à 3, **caractérisée en ce que** la tresse anti-friction (6) est réalisée dans un matériau choisi dans le groupe formé par les alliages cuivreux, les fibres naturelles et les fibres synthétiques.

5. Tubulure flexible (1) selon l'une quelconque des revendications 1 à 4, **caractérisée en ce que** chaque tresse de tenue en pression (9) est réalisée en acier inoxydable.

6. Tubulure flexible (1) selon l'une quelconque des revendications 1 à 5, **caractérisée en ce que** chaque gaine d'amortissement (12) est réalisée en une tresse en fibres de verre ou en un tricot de fibres de verre enduit de silicone.

7. Tubulure flexible (1) selon l'une quelconque des revendications 1 à 6, **caractérisée en ce que** la protection mécanique externe consiste en un tuyau agrafé (13) réalisé en acier inoxydable ou autre.

## Claims

1. Flexible tube (1) intended in particular for transporting hazardous or non-hazardous fluids, this flexible tube comprising an internal corrugated pipe (2) around which there are attached at least one pressure-resistant braid (9) of tubular shape made of a suitable material and an external mechanical protection (13) of tubular shape, **characterized in that** it comprises, on the one hand, an antifriction braid (6) of tubular shape positioned between the corrugated pipe (2) and the pressure-resistant braid (9), said antifriction braid (6) being made of a suitable material of which the hardness and/or the coefficient of friction are lower than those of the material used to make the pressure-resistant braid (9) and, on the other hand, at least one damping sheath (12) positioned between the pressure-resistant braid (9) and the external mechanical protection (13).

2. Flexible tube (1) according to Claim 1, **characterized in that** the corrugated pipe (2) has parallel or helical corrugations (3).

3. Flexible tube (1) according to either one of Claims 1 and 2, **characterized in that** the corrugated pipe (2) is made of a material chosen from the group formed of stainless steels and nickel-based alloys.

4. Flexible tube (1) according to any one of Claims 1 to 3, **characterized in that** the antifriction braid (6) is made of material chosen from the group formed of copper-based alloys, natural fibers and synthetic fibers.

5. The flexible tube (1) according to any one of claims 1 to 4, **characterized in that** each pressure-resistant braid (9) is made of stainless steel.

6. The flexible tube (1) according to any one of claims 1 to 5, **characterized in that** each damping sheath (12) is made of a fiberglass braid or a fiberglass knit coated with silicone.

7. The flexible tube (1) according to any one of claims 1 to 6, **characterized in that** the external mechanical protection consists of an interlocked pipe (13) made of stainless steel or some other material.

## Patentansprüche

1. Schlauch (1), der besonders für den Transport von gefährlichen oder ungefährlichen Fluiden bestimmt ist und ein gewelltes Innenrohr (2), um das mindestens ein rohrförmiges druckfestes Geflecht (9) angebracht ist, das aus einem geeigneten Material hergestellt ist, sowie einen rohrförmigen äußeren mechanischen Schutz (13) umfasst, **dadurch gekennzeichnet, dass** er einerseits ein rohrförmiges Antifriktionsgeflecht (6), das zwischen dem gewellten Rohr (2) und dem druckfesten Geflecht (9) positioniert ist, wobei das Antifriktionsgeflecht (6) aus einem geeigneten Material hergestellt ist, dessen Härte und/oder Reibungskoeffizient unter denen des Materials liegen, das zur Herstellung des druckfesten Geflechts (9) verwendet wird, und andererseits mindestens eine Dämpfungshülle (12) umfasst, die zwischen dem druckfesten Geflecht (9) und dem äußeren mechanischen Schutz (13) positioniert ist.

2. Schlauch (1) nach Anspruch 1, **dadurch gekennzeichnet, dass** das gewellte Rohr (2) parallele oder spiralförmige Wellen (3) umfasst.

3. Schlauch (1) nach Anspruch 1 oder 2, **dadurch gekennzeichnet, dass** das gewellte Rohr (2) aus einem aus der durch rostfreie Stähle und Legierungen auf Nickelbasis gebildeten Gruppe gewählten Material hergestellt ist.

4. Schlauch (1) nach einem der Ansprüche 1 bis 3, **dadurch gekennzeichnet, dass** das Antifriktionsgeflecht (6) aus einem aus der durch Legierungen auf Kupferbasis, Naturfasern und Kunstfasern gebildeten Gruppe gewählten Material hergestellt ist.

5. Schlauch (1) nach einem der Ansprüche 1 bis 4, **dadurch gekennzeichnet, dass** jedes druckfeste Geflecht (9) aus rostfreiem Stahl hergestellt ist.

6. Schlauch (1) nach einem der Ansprüche 1 bis 5, **dadurch gekennzeichnet, dass** jede Dämpfungshülle (12) aus einem Glasfasergeflecht oder aus einem silikonbeschichteten Glasfasergewirke hergestellt ist.

7. Schlauch (1) nach einem der Ansprüche 1 bis 6, **dadurch gekennzeichnet, dass** der äußere mechanische Schutz aus einem aus rostfreiem Stahl oder einem anderen Material hergestellten Wickelfalzrohr (13) besteht.
